# EUROPÄISCHE PATENTANMELDUNG

(11) **EP 0 889 322 A2**
(43) Veröffentlichungstag der Anmeldung: **07.01.1999**
(21) Anmeldenummer: 98112093.4
(22) Anmeldetag: 01.07.1998
(51) Int. Cl.: G01N 29/24

(54) **Verfahren zur zerstörungsfreien Prüfung eines Eisenbahnrads**

(30) Priorität: 03.07.1997 DE 19728508
(71) Anmelder: Schneider, Friedhelm Dr.-Ing., 41844 Wegberg (DE)
(72) Erfinder: Schneider, Friedhelm Dr.-Ing., 41844 Wegberg (DE)
(74) Vertreter: von Creytz, Dietrich, Dipl.-Phys.

(57) **Zusammenfassung**

Es wird ein Verfahren zur zerstörungsfreien Prüfung eines Eisenbahnrads, insbesondere von dessen Lauffläche, mittels in dem Rad selber erzeugten mechanischen Wellen beschrieben. Um zu erreichen, daß ein Ultraschallimpuls im Rad sicher erzeugt wird, auch wenn viele kleine Risse einen elektrischen Stromfluß im Material des Prüflings behindern, wird im Material des Rades eine die mechanische Welle hervorrufende Längenänderung unmittelbar durch eine nicht mechanische, insbesondere thermische oder magnetische, Einwirkung von außerhalb des Rades erzeugt.

## Beschreibung

Die Erfindung betrifft ein Verfahren zur zerstörungsfreien Prüfung eines Eisenbahnrads auf Risse mit Hilfe von erst im Rad selber erzeugten mechanischen Wellen. sie betrifft ferner eine Vorrichtung zur Durchführung des Verfahrens.

Seit alters her prüfen Bahnbedienstete beim Halt eines Zuges auf dem Bahnhof mit einem langen Hammer die Eisenbahnräder. Durch Schlagen mit dem Hammer gegen das einzelne Rad bringen sie dieses in Schwingungen, so daß Schallwellen einer bestimmten Tonlage zu hören sind. Wenn diese Tonlage von der Norm abweicht, müssen eingehendere Untersuchungen vorgenommen werden. Üblich sind heute Ultraschall-Prüfungen. Die hierfür erforderliche mechanische Erregung kann beispielsweise mit Hilfe von Piezoelementen erfolgen. Der entsprechende mechanische Erreger befindet sich - wie der vorgenannte Hammer - außerhalb des Rades. Für die Übertragung der mechanisch erregten Wellen ist daher ein Koppelmedium, z.B. Öl, Fett oder Wasser, erforderlich. Öle und Fette verbieten sich aus Gründen des Umweltschutzes. Wasser ist - jedenfalls im Winter, bei Frost - nur bedingt einsetzbar, nämlich wenn im Freien geprüft werden soll.

Bei ferromagnetischen Materialien kann der magnetostriktive Effekt zur Ultraschallerzeugung benutzt werden. Hier wird die Längenänderung des Materials unter Einwirkung eines wechselnden Magnetfeldes ausgenutzt. Wenn man beispielsweise einen Eisenstab in einer von Wechselstrom durchflossenen Spule dauernd ummagnetisiert, treten Längenänderungen im Rhythmus des Wechselstroms auf, die zu Schallschwingungen Anlaß geben. Es gibt magnetostriktive Schwinger (vgl. das entsprechende Stichwort in 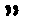 Fachlexikon ABC Physik", Verlag Harri Deutsch, 1974) bzw. magnetomechanische Wandler, mit deren Hilfe elektrische Wechselströme in mechanische Schwingungen des Ultraschallbereichs bis etwa 60 kHz umgewandelt werden können. Hierbei wird ein in eine Wechselstromspule gesetzter Spulenkern aus Nickel zur mechanischen Eigenschwingungen im Ultraschallbereich angeregt. Die dadurch erzeugten Ultraschallwellen können über ein Koppelmedium auf einen mittels Ultraschall zu untersuchenden Prüfling übergeleitet werden. Beispielsweise durch eine Vormagnetisierung des die Ultraschallwelle mechanisch erregenden Kerns wird ein für die Umwandlung der Energie des eingesetzten Wechselstroms in Ultraschall günstiger Arbeitspunkt erreicht. Laut W. Kaule 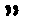 Die Technik", 16. Jahrgang, Heft 5, Mai 1961, Seiten 385 - 389, kann die Magnetostriktion zur Prüfung von Drähten und Stäbe aus Stahl benutzt werden.

Für die Rißprüfung von Eisenbahnrädern gibt es ein in DE 26 55 804 C3 oder DE 32 18 453 C2 beschriebenes elektrodynamisches Verfahren oder Lorentz-Verfahren. Hierbei wird eine Spule in die Nähe der Lauffläche des Rades gebracht. Die Spule wird mit einem Wechselstrom mit einer Frequenz von einigen 100 kHz gespeist, um Wirbelströme in der oberflächennahen Schicht der Lauffläche zu induzieren. Dem so erzeugten Wirbelstromfeld wird ein starkes magnetisches Gleichfeld überlagert. Die durch das Zusammenwirken von elektrischen Wirbelströmen und magnetischem Gleichfeld bedingte Lorentzkraft führt zu mechanischen Scherkräften in der Materie des Rades. Erst auf dem Umwege über die mechanischen Kräfte werden Längenänderungen im Radkörper erzeugt, die dann mechanische Wellen im Radkörper und beispielsweise Rayleigh-Wellen in der Radlauffläche verursachen. Die Rayleigh-Wellen können abhängig von der Frequenz des eingesetzten Wechselstroms Ultraschallwellen innerhalb der Radlauffläche zur Folge haben. Der Ultraschall wird bei diesem Verfahren also nicht über ein Koppelmedium in das Rad gebracht, sondern durch mechanische Scherkräfte im Prüfling erzeugt. Die entsprechende Kraftquelle ist der Bereich innerhalb des Rades, in welchem die Wirbelströme durch ein magnetisches Gleichfeld überlagert werden.

In einem Eisenbahnrad mit rißfreier Lauffläche bereiten sich die Rayleigh-Wellen entlang der Radlauffläche aus. Bei einem mittleren Radumfang von ca. 3 m benötigt ein Impuls für einen Umlauf ca. 1 ms. Nach jedem Umlauf kann der Impuls in einem Empfänger registriert werden. Trifft der Impuls jedoch auf einen quer zur Umfangsrichtung des Rades verlaufenden Riß, wird er zumindest teilweise reflektiert und das durch die Reflexion gebildete Echo- oder Fehlersignal gelangt früher zu dem Empfänger zurück. Da das Fehlersignal früher als das um das Rad oder durch das Rad laufende Signal eintrifft, kann es dem Prüfer einen Fehler anzeigen.

Das Lorentz-Verfahren ist geeignet, einzelne Risse in einem neuen Eisenbahnrad auf elektrodynamischem Wege nachzuweisen. Es hat sich jedoch in der Praxis gezeigt, daß die Laufflächen von gebrauchten Eisenbahnrädern nach einer gewissen Zeit der Benutzung viele Risse aufweisen. Die Masse dieser Risse stellt in der Regel noch keine direkte Gefahr für den Eisenbahnbetrieb dar, trotzdem funktioniert das Lorentz-Verfahren in vielen Fällen überhaupt nicht, weil sich - wegen zu vieler kleiner Risse - die für die Lorentzkraft erforderlichen Wirbelströme schlecht oder gar nicht ausbilden können.

Der Erfindung liegt die Aufgabe zugrunde, im Rad eine mechanische Welle, insbesondere einen Ultraschallimpuls, ohne ein Koppelmedium auch dann sicher zu erzeugen, wenn viele kleine, nicht störende Risse, einen Stromfluß und damit Wirbelströme im Material des Prüflings, nämlich der Radlauffläche, verhindern.

Die erfindungsgemäße Lösung besteht für das eingangs genannte Verfahren darin, daß im Material des Rades eine die mechanischen Wellen hervorrufende Längenänderung unmittelbar durch eine nicht mechanische Einwirkung von außerhalb des Rades erzeugt wird.

Erfindungsgemäß soll also die zur Prüfung des jeweiligen Eisenbahnrades benutzte mechanische Welle weder durch mechanische Einwirkung von außen, z.B. durch das Schlagen mit dem Hammer, noch auf dem Umweg über zunächst elektrodynamisch im Körper des Rades erzeugte Lorentzkräfte hervorgerufen werden. Die erste Methode ist zu ungenau, die andere versagt bei mehr oder weniger lange gebrauchten Rädern, weil sich die erforderlichen Wirbelströme nicht ordnungsgemäß ausbilden können. Statt dessen können die zur Prüfung des - stehenden oder rollenden - Rades vorgesehenen mechanischen Wellen erfindungsgemäß unmittelbar durch eine rein thermische oder rein magnetische nicht mechanische Einwirkung von außerhalb des Rades hervorgerufen wird. Vorzugsweise wird hierzu ein sich ändernder und damit dadurch eine Längenänderung thermisch verursachender Laserstrahl auf das Rad, insbesondere auf dessen Lauffläche oder auf einer Kante der Lauffläche, gerichtet. Alternativ können die mechanischen Wellen im Rahmen der Erfindung im Rad erzeugt werden, indem ein sich änderndes und dadurch eine Längenänderung in Folge von Magnetostriktion hervorrufendes Magnetfeld auf das Rad gerichtet wird. Bei dem Laserverfahren werden zwar relativ große Laserenergien benötigt, es können aber sehr hohe Frequenzen und sehr kurze Impulse, insbesondere stoßartige Einwirkungen, annähernd wie ein Einzelimpuls, problemlos erzeugt werden. Demgegenüber hat das Magnetostriktionsverfahren den Vorteil, daß es - genauso kontaktlos wie das Laserverfahren - mit Hilfe eines Elektromagneten auf einfachste Weise zu realisieren ist.

Bei Einsatz des Laserverfahrens wird ein Laserstrahl ausreichender Energie auf einen als Quellbereich der zu erzeugenden mechanischen Wellen bezeichneten Teil des Eisenbahnrads gerichtet. Der Laserstrahl kann in Form eines Einzelimpulses oder in Form eines Impulszugs Wärmeimpulse und unmittelbar dadurch Längenänderungen - ausgehend vom Quellbereich - hervorrufen. Die Längenänderungen schwingen dann mit der in den Laser eingeprägten Impulsfrequenz. Hierbei kann es sich um eine Grundfrequenz mit einigen Oberwellen und möglicherweise einigen (meist eine geringe Amplitude aufweisenden) Störungen handeln. Es ist aber auch möglich, - speziell bei einem Einzelimpuls, der einem Dirac-Stoß angenähert ist - Längenänderungen mit einer Vielzahl von Frequenzen in dem Quellbereich zu erzeugen. Die jeweils dadurch erzeugten Schwingungen können sich nicht nur als Oberflächenwellen längs der Lauffläche, sondern auch als Körperwellen - ähnlich seismischen Wellen - quer durch den Körper, reflektiert oder gebeugt, bewegen. Wichtig für die vorgesehene Messung ist es, daß die Wellen auf ihrem normalen Ausbreitungsweg an irgendwelchen Fehlern, z.B. Rissen, des Rades wenigstens zum Teil reflektiert oder abgelenkt werden. Man braucht dann nur noch an einer oder mehreren Stellen des Rades Empfänger zu positionieren, die die Laufzeit und gegebenenfalls die Bewegungsrichtung der reflektierten Signale bzw. Echosignale anzeigen, messen bzw. aufzeichnen. Für eine solche Messung kann es günstig sein, wenn eine sich in dem Rad fortpflanzende mechanische Welle durch Erfassen der durch sie bewirkten Oberflächenveränderung mit Hilfe eines Laserstrahls abgetastet wird. Gegebenenfalls kann also sowohl zum Erzeugen der mechanischen Welle als auch zum Registrieren einer vorher erzeugten Welle ein Laser herangezogen werden. Grundsätzlich kann aber jedes andere einschlägige Meßgerät eingesetzt werden, das in der Lage ist, die erzeugten Frequenzen zu erfassen, zu trennen bzw. aufzuzeichnen. In diesem Sinne können elektrodynamische Methoden, das vorgenannte Magnetostriktionsverfahren, aber auch, insbesondere wenn es um Schall- oder niederfrequente Ultraschallwellen geht, hierfür ausgebildete Mikrofone eingesetzt werden.

Wenn die zur zerstörungsfreien Prüfung im Rad erzeugten mechanischen Wellen nach dem Magnetostriktionsverfahren erregt werden, wird ein mit der jeweils gewünschten Frequenz bzw. einem Frequenzbereich beaufschlagter Elektromagnet an das Rad - nämlich dem vorgesehenen Quellbereich der mechanischen Wellen - gesetzt. Auf diese Weise lassen sich die mechanischen Wellen, insbesondere Rayleigh-Wellen, allein von einem entsprechend der vorgesehenen Frequenz wechselnden Magnetfeld im Rad, insbesondere in dessen Lauffläche, durch Magnetostriktion - also ohne Lorentzkräfte - erzeugen. Die Quelle der mechanischen Wellen im Rad wird hierbei also - im Ergebnis genauso wie bei dem Laserverfahren - innerhalb des Rades selbst und auf nicht mechanische Weise, nämlich allein durch Magnetostriktion erreicht. Die Umkehrung der Magnetostriktion - nämlich der magnetische Zugeffekt - kann bevorzugt zum Registrieren eines um das Rad umgelaufenen oder an einen Fehlerbereich reflektierten Wellensignals herangezogen werden. Aber auch wenn die zur Prüfung gewünschten mechanischen Wellen durch Magnetostriktion erzeugt werden, kann jedes andere herkömmliche Meßverfahren, insbesondere auch ein elektrodynamischer Wandler, ein Laser oder ein Mikrofon, zur Messung eingesetzt werden.

Ein Aspekt der Erfindung besteht darin, unmittelbar mit Hilfe eines auf das Eisenbahnrad wirkenden, sich ändernden Laserstrahls oder Magnetfeldes im Rad bzw. in dessen Laufring ein Längenänderungen im Rhythmus der erregenden Frequenzen unmittelbar durch rein thermische oder rein magnetische Einwirkung von außerhalb des Rades zu erzeugen. Die bei dem aus der vorgenannten DE 32 18 453 C2 bekannten Lorentzverfahren zur Erzeugung der Rayleigh-Wellen erforderlichen Wirbelströme spielen also bei der Erfindung keine Rolle. Das erfindungsgemäße Verfahren ermöglicht es daher, auch dann gefährliche Risse in einer Lauffläche zu erfassen, wenn das jeweilige Eisenbahnrad nach einiger Laufleistung bereits kleinere Risse, die die Ausbreitung und/oder sogar die Ausbildung von Wirbelströmen verhindern, aufweist.

Nach Vorstehendem können die Rayleigh-Wellen erfindungsgemäß in einem Quellbereich unter anderem mit Hilfe des magnetostriktiven Effekts unmittelbar in der Materie des zu untersuchenden Eisenbahnrads selbst erzeugt werden. Nach einem weiteren Gedanken der vorliegenden Erfindung erfolgt die Messung einer sich in einem Eisenbahnrad längs dessen Lauffläche ausbreitenden Rayleigh-Welle unter Anwendung einer Umkehrung der Magnetostriktion, das heißt es wird ausgenutzt, daß sich eine vorhandene Magnetisierung infolge mechanischer Spannungen ändert. Hierbei wird ausgenutzt, daß man durch mechanische Änderung der Liniendichte einer auf irgendeine Weise in einem Empfangsbereich des Rades erzeugten Magnetisierung, also durch Änderung der Magnetisierung, in einer Empfangsspule eine elektrische Spannung induzieren kann. Mit Hilfe des entsprechenden elektrischen Signals können die wichtigsten Daten, z.B. die Signalamplitude oder die Laufzeit, der erregenden mechanischen Welle, aufgezeichnet und ausgewertet werden.

Wie an sich bekannt, soll bei dem Magnetostriktionsverfahren der Arbeitspunkt des erfindungsgemäß eingesetzten wechselnden Magnetfeldes in einen Bereich (der Magnetfeld/Magnetostriktion-Kennlinie) mit überall von Null verschiedener Magnetostriktion verlagert werden. Ziel ist es dabei, die durch die Magnetostriktion verursachte Längen- bzw. Volumenänderung relativ groß und demgemäß der beabsichtigte Wirkungsgrad der eingesetzten Energie des magnetischen Wechselfeldes akzeptabel zu machen.

In einem Ausführungsbeispiel einer erfindungsgemäßen Magnetostriktions-Vorrichtung werden ein Quellbereich und ein Meßbereich in dem Rad durch ein angrenzend positioniertes Sendegerät bzw. ein angrenzend positioniertes Empfangsgerät definiert. Zum Sendegerät gehört eine Sende(magnet)spule, deren Magnetfeld entsprechend der vorgesehenen Frequenz der Längenänderung schwingt. Zum Empfangsgerät gehört vor allem eine Empfangsspule (mit nachgeschalteten Meß- und Registriermitteln). Eine ankommende Rayleigh-Welle moduliert in dem Meßbereich (in der Materie des Rades) dort bestehendes magnetisches Gleichfeld und induziert dadurch in der Empfangsspule eine Spannung im Takt der Rayleigh-Welle. Im Rahmen der Erfindung können sowohl zum Erzeugen des Quellbereichs als auch zum Empfangen des jeweiligen Rayleigh-Signals Magnetspulen - nämlich Sende- und Empfangsspulen - verwendet werden, die unmittelbar an die Lauffläche des Rades angesetzt und als Luftspulen, aber auch als Spulen mit geblechtem oder aus ferritischem Material bestehendem Spulenkern ausgebildet werden können. Im Prinzip ähnlich werden die mechanischen Wellen erzeugt und gemessen, wenn nach dem Laser-Verfahren gearbeitet wird.

Unter Bezugnahme auf die beiliegende Zeichnung werden einige Einzelheiten der Erfindung erläutert. Es zeigen:
- **Fig. 1**: das Grundprinzip der Erzeugung und Messung der mechanischen Wellen mit Hilfe von Lasern;
- **Fig. 2**: das Grundprinzip der magnetostriktiven Wellenanregung;
- **Fig. 3**: ein Kennlinien-Diagramm mit der Abhängigkeit von Magnetfeldstärkenänderung und Längenänderung; und
- **Fig. 4**: ein Diagramm betreffend die Energie einer Rayleigh-Welle in Abhängigkeit von der Eindringtiefe der Welle.

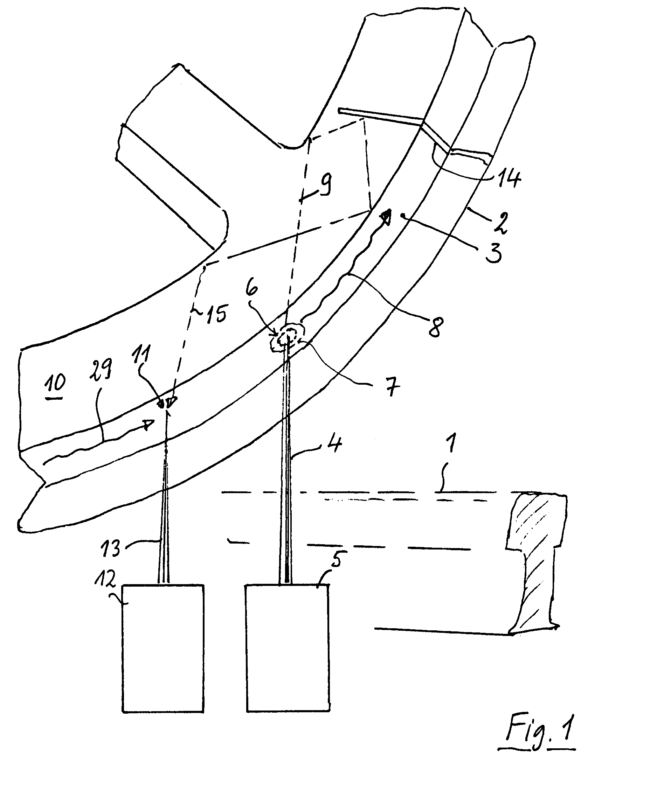

Fig. 1 zeigt das Grundprinzip der erfindungsgemäßen Erzeugung, aber auch der Messung, der mechanischen Wellen mit Hilfe von Lasern. Ein auf einer Schiene 1 stehendes oder rollendes, insgesamt mit 2 bezeichnetes Eisenbahnrad, wird an seiner Lauffläche 3 mit einem gepulsten Laserstrahl 4, der aus einem Laser-Erreger 5 kommt, in einem vorgesehenen Quellbereich 6 bestrahlt. Es kann sich - wie gesagt - um einen Einzelimpuls mit einer Vielzahl von Frequenzen oder beispielsweise um einen Impulszug mit im wesentlichen einer Frequenz handeln. Durch das Auftreffen des Laserstrahls 4 auf dem Quellbereich 6 wird dort das Material des Rades 2 mit der Impulsfrequenz des Lasers abwechselnd erhitzt und abgekühlt. Dadurch entstehen mechanische Wellen 7, die sich (ähnlich seismischen Wellen) als Oberflächenwellen 8 längs der Lauffläche 3 oder als Körperwellen 9 durch den Radkörper 10 bewegen und dabei in der gezeichneten Weise an Grenzflächen reflektiert werden können.

Die einzelnen vom Quellbereich 6 ausgehenden Wellen können auf diese Weise früher oder später - die Oberflächenwellen 8 nach einem Umlauf um das Rad - in den Meßbereich 11 eines Laserfühlers 12 gelangen. Auch der Laserfühler 12 sendet einen Laserstrahl in Richtung auf den Meßbereich 11, dieser Meßstrahl 13 registriert mechanische Bewegungen bzw. mechanische Wellen im Meßbereich 11. Wenn also ein Laserstrahl 4 als Einzelimpuls mit einer Zeitdauer von vielleicht 10⁻⁶ sec. oder als Impulsfolge mit einer Zeitdauer von vielleicht 10⁻⁴ sec, beispielsweise als Oberflächenwelle 8, um das Rad umgelaufen ist, wird die Welle vom Laserfühler 12 registriert. Nach der Zeitdauer eines Umlaufs, also z.B. nach einer Mikrosekunde, registriert der Laserfühler 12 einen Ausschlag, der den Oberflächenwellen 8 entspricht. Andere Wellen, z.B. die gezeichneten Körperwellen 9, haben eine andere Laufzeit, sie führen zu einem anderen Ausschlag in der Meßkurve des Laserfühlers 12. Auf diese Weise lassen sich die normalen, das heißt einem unversehrtem Rad entsprechenden Anschläge, feststellen. Wenn das einzelne Rad 2 jedoch einen Fehler, z.B. einen Riß 14, aufweist, werden an diesem Fehler die vom Quellbereich 6 ausgehenden Wellen zum Teil reflektiert. Eine solche reflektierte Welle wird in der Zeichnung mit 15 gekennzeichnet. Sie gelangt auf einem gegenüber dem Weg um das Rad herum relativ kurzen Weg - jedenfalls auf einem anderen Weg, mit anderer Laufzeit - zum Meßbereich 11 und wird dort wie eine mechanische Erschütterung der Lauffläche 3 von dem Meßstrahl 13 erfaßt.

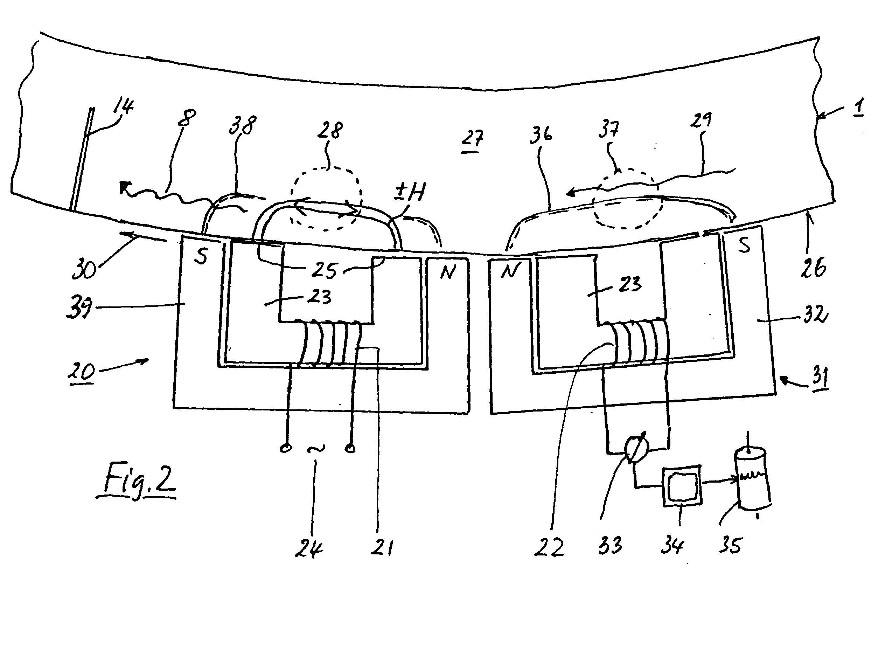

Anhand von Fig. 2 wird das Grundprinzip der magnetostriktiven Wellenanregung am Beispiel eines an die Lauffläche 3 eines Eisenbahnrades 2 gesetzten Sendegeräts 20 Sendespule 21 und Empfangsspule 22 (jeweils mit zugehörigem U-Eisenkern 23, sowie mit zugehöriger Beschaltung) beschrieben. An der Sendespule 21 liegt eine Wechselspannungsquelle 24, mit deren Hilfe ein z.B. etwa zehn Perioden umfassender Impuls-Burst von 100 bis 400 kHz gesendet werden kann. Die Pole 25 des Eisenkerns 23 werden an die nach Fig. 2 als Magnetjoch wirkende Lauffläche 26 des Radreifens 27 des Eisenbahnrads 1 angesetzt. Durch das bei Beaufschlagung der Spule 21 im Radreifen 27 erzeugte magnetische Wechselfeld H wird ein Quellbereich 28 in dem ferromagnetischen Körper des Rades bzw. Radreifens 27 dauernd (mit der Wechselfrequenz) ummagnetisiert und es treten Volumen- und/oder Längenänderung im Rhythmus der Wechselstromfrequenz auf. Dadurch entstehen - ausgehend von dem Quellbereich 28 - Oberflächenwellen 8, welche sich längs des Radreifens in beiden Radumfangsrichtungen 30 fortpflanzen. Die Oberflächenwellen 8 bzw. Rayleigh-Wellen laufen in den Umfangsrichtungen 30 längs der Lauffläche 26 um den Radreifen 27 herum und erscheinen dann (z.B. nach 1 ms) wieder als Umlaufsignal 29.

Jede im Radreifen 27 umgelaufene Welle 29 kann nach Fig. 2 mit Hilfe eines Empfangsgeräts 31 registriert werden. Zu diesem gehören im gezeichneten Ausführungsbeispiel ein Permanentmagnet 32 (oder eine auf andere Weise erzeugte bzw. eine bestehende Magnetisierung des Empfangsbereichs 37) und die Empfangsspule 22; auf letztere können ein Meßgerät 33, ein Bildschirm 34 und/oder ein Laufzeit-Registriergerät 35 geschaltet werden. Wenn eine der vom Quellbereich 6 ausgehenden mechanischen Wellen nicht voll umläuft, weil sie an einem (quer zu der Umfangsrichtung 30) gehenden Riß 14 (teilweise) reflektiert wird, zeigen die Meß- und Aufzeichnungsgeräte 33 bis 35 andere Werte für die Laufdauer als bei vollem Umlauf. Die Empfangsspule 23 kann im Prinzip ähnlich wie die Sendespule 21 ausgebildet werden und insbesondere einen U-Eisenkern 23 besitzen.

Zur Messung selbst werden Änderungen des von dem Empfangsgerät 31 im Empfangsbereich 37 vorhandenen statischen Magnetfeldes 36 ausgewertet. Die Feldlinien dieses Magnetfeldes 36 bzw. die Liniendichte dieses Feldes werden nämlich in dem Empfangsbereich 37 durch eine eingehende Rückkehrwelle verändert bzw. moduliert. Wenn Änderungen des Permanentmagnetfeldes 36 in die Empfangsspule 22 eindringen, wird dort ein der Magnetfeldänderung entsprechendes elektrisches Signal induziert. Zur Messung im Empfangsbereich 37 wird also im Ausführungsbeispiel eine Umkehrung der Magnetostriktion, nämlich eine Magnetisierungsänderung infolge mechanischer Spannungen (verursacht durch Rayleigh-Wellen) herangezogen. Dabei ist es im Prinzip unerheblich, woher die ursprüngliche (quasi) statische Magnetisierung rührt.

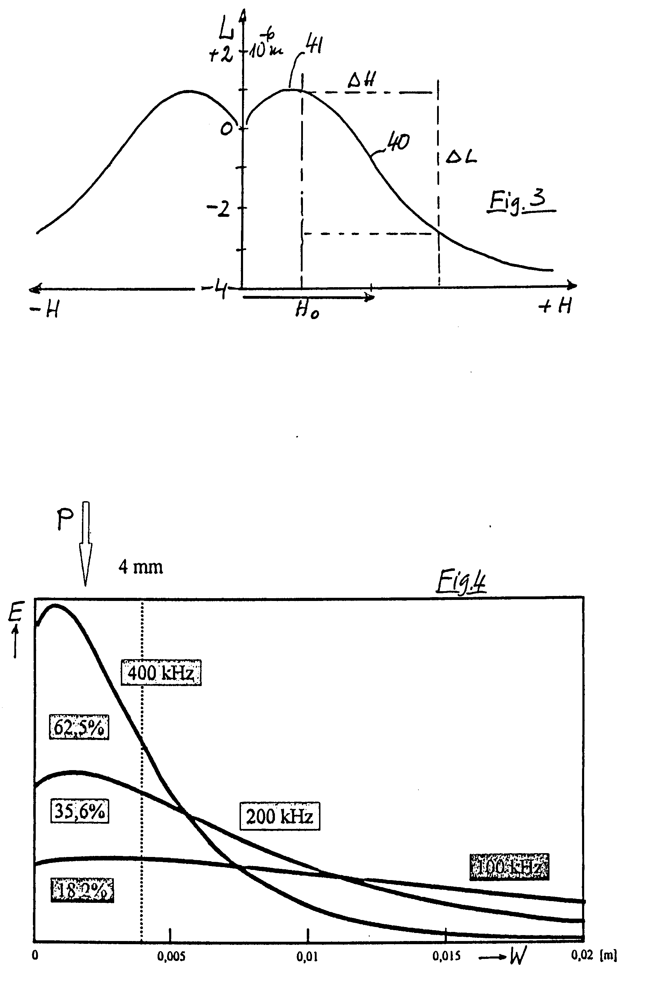

In einer bevorzugten Ausgestaltung der Erfindung wird dem wechselnden Magnetfeld H der Sendespule 21 ein statisches bzw. quasi statisches Magnetfeld 38 überlagert. Geeignet sind beispielsweise eine Vormagnetisierung des Kerns 23 der Spule 21 oder das statische Magnetfeld 38 eines Permanentmagneten 39. Dieses (quasi) statische Magnetfeld 38 hat keine Funktion bei der Erzeugung der Magnetostriktion, z.B. des dadurch bedingten Ultraschalls, es dient nach Fig. 3 vielmehr als ein Mittel dazu, den Arbeitspunkt des wechselnden Magnetfeldes H so zu verschieben, daß die Änderung des Magnetfeldes in den Bereich großer magnetostriktiver Längenänderungen des Materials des Radreifens fallen. Fig. 3 zeigt ein typisches Bild der Längenänderung L in einem ferromagnetischen Körper in Abhängigkeit von der Magnetfeldstärke H. Wenn sich die Magnetfeldstärke H von +H nach -H schwingt, ändert sich die Länge des ferromagnetischen Körpers in der im Prinzip dargestellten Weise nichtlinear und zwar mit doppelter Frequenz. Durch Vormagnetisierung mit dem Magnetfeld 38, das in Fig. 3 mit H₀ bezeichnet ist, wird der Arbeitspunkt einer Feldstärkenänderung ΔH so auf einen Kurvenzweig 40 gelegt, daß sich für ein vorgegebenes ΔH eine möglichst große Längenänderung ΔL ergibt; der Kurvenzweig 40 schließt ersichtlichen keinen der Extremwerte 41 ein. Im Ergebnis das gleiche wie mit einer gesonderten Vormagnetisierung läßt sich auch erreichen, wenn man den Erregerstrom des jeweiligen Elektromagneten in einen Bereich mit Abstand vom Null-Durchgang schwingen läßt, der dem Kurvenzweig 40 entspricht.

Durch Magnetostriktion werden ebenso wie bei dem Laser-Verfahren im Radreifen 27 Rayleigh-Wellen 8, 9 bzw. 29 erzeugt. Bekanntlich ist die Verteilung der Energie E von Rayleigh-Wellen senkrecht zur Oberfläche abhängig von deren Eindringtiefe W und diese ist abhängig von der Frequenz. Fig. 4 zeigt die Energieverteilung von Rayleigh-Wellen senkrecht zur Oberfläche für drei verschiedene Frequenzen, nämlich 100, 200 und 400 kHz. Es wird der Prozentsatz P der Energie der Rayleigh-Welle in einer Schicht von 4 mm unterhalb der Oberfläche (das ist die Null-Koordinate in Fig. 4) angegeben. Wenn bei der Prüfung eines Eisenbahnrades Risse unterhalb einer Tiefe von 4 mm nicht interessieren, braucht man nur mit relativ geringer Frequenz, z.B. unter 100 kHz, zu arbeiten, weil dann nur ein geringer Teil der Energie der Rayleigh-Welle auf die 4 mm-Oberflächenschicht entfällt. Soll dagegen speziell eine dünne Oberflächenschicht untersucht werden, wird die Frequenz der auf die Spule 21 von Fig. 2 geschalteten Spannung erhöht. Wie Fig. 4 zeigt, entfallen dann 2/3 der Energie der Ultraschallwelle in die 4 mm-Oberflächenschicht des Laufrades.

Es wird ein Verfahren zur zerstörungsfreien Prüfung eines Eisenbahnrads, insbesondere von dessen Lauffläche, mittels in dem Rad selber erzeugten mechanischen Wellen beschrieben. Um zu erreichen, daß ein Ultraschallimpuls im Rad sicher erzeugt wird, auch wenn viele kleine Risse einen elektrischen Stromfluß im Material des Prüflings behindern, wird im Material des Rades eine die mechanische Welle hervorrufende Längenänderung unmittelbar durch eine nicht mechanische, insbesondere thermische oder magnetische, Einwirkung von außerhalb des Rades erzeugt.

### Bezugszeichenliste

- 1: = Schiene
- 2: = Eisenbahnrad
- 3: = Lauffläche (2)
- 4: = Laserstrahl
- 5: = Lasererreger
- 6: = Quellbereich
- 7: = mechanische Wellen
- 8: = Oberflächenwellen
- 9: = Körperwellen
- 10: = Radkörper
- 11: = Meßbereich
- 12: = Lasefühler
- 13: = Meßstrahl
- 14: = Riß
- 15: = reflektierte Welle
- 20: = Sendegerät
- 21: = Sendespule
- 22: = Empfangsspule
- 23: = Eisenkern
- 24: = Wechselspannungsquelle
- 25: = Pol
- 26: = Lauffläche
- 27: = Radreifen
- 28: = Quellbereich
- 29: = Umlaufsignal
- 30: = Umfangsrichtung
- 31: = Empfangsgerät
- 32: = Permanentmagnet
- 33: = Meßgerät
- 34: = Bildschirm
- 35: = Registriergerät
- 36: = statisches Magnetfeld
- 37: = Empfangsbereich
- 38: = statisches Magnetfeld
- 39: = Permanentmagnet
- 40: = Kurvenzug
- 41: = Extremwerte

## Patentansprüche

1. Verfahren zur zerstörungsfreien Prüfung eines Eisenbahnrads (2) auf Risse (14) mit Hilfe von erst im Rad selber erzeugten mechanischen Wellen (7, 8),
**dadurch gekennzeichnet**,
daß im Material des Rades (2) eine die mechanischen Wellen (7, 8) hervorrufende Längenänderung unmittelbar durch eine nicht mechanische Einwirkung von außerhalb des Rades erzeugt wird.

2. Verfahren nach Anspruch 1,
**dadurch gekennzeichnet**,
daß ein sich ändernder und dadurch eine Längenänderung thermisch verursachender Laserstrahl (4) auf das Rad (2) gerichtet wird.

3. Verfahren nach Anspruch 1,
**dadurch gekennzeichnet**,
daß ein sich änderndes und dadurch eine Längenänderung in Folge von Magnetostriktion hervorrufendes Magnetfeld (H) auf das Rad (2) gerichtet wird.

4. Verfahren nach mindestens einem der Ansprüche 1 bis 3,
**dadurch gekennzeichnet,**
daß auf das Material des Rades (2) ein thermischer oder magnetischer Impuls zum Erzeugen von Längenänderungen mit einer Vielzahl von Frequenzen ausgeübt wird.

5. Verfahren nach mindestens einem der Ansprüche 1 bis 3,
**dadurch gekennzeichnet,**
daß auf das Material des Rades (3) ein, insbesondere nur wenige Perioden umfassender, thermisch oder magnetisch erregter Impulszug (4) zum Erzeugen einer einer bestimmten Frequenz folgenden Längenänderung mit den Frequenzen, bevorzugt zum Erzeugen von Rayleigh-Wellen in der Lauffläche (3) des Rades (2), ausgeübt wird.

6. Verfahren nach mindestens einem der Ansprüche 1 bis 5,
**dadurch gekennzeichnet,**
daß eine sich in dem Rad (2) fortpflanzende mechanische Welle (7, 8) zum Erfassen der durch sie bewirkten Oberflächenveränderung mit Hilfe eines Laserstrahls (13) oder durch Erfassen der durch sie bewirkten Magnetostriktion abgetastet wird.

7. Verfahren nach Anspruch 6 bei Anwendung der Magnetostriktion,
**dadurch gekennzeichnet,**
daß durch eine von einer mechanischen Welle verursachte mechanische Änderung einer in dem Rad (2) vorhandenen oder erzeugten statischen bzw. quasi statischen Magnetisierung in Umkehrung der Magnetostriktion ein elektrischer Strom in einer Empfangsspule (22) induziert wird.

8. Verfahren nach mindestens einem der Ansprüche 1 bis 7,
**dadurch gekennzeichnet,**
daß der Arbeitspunkt des wechselnden Magnetfeldes (H) in einen Kennlinien-Bereich mit überall von Null verschiedener Magnetostriktion verlegt wird.

9. Verfahren nach mindestens einem der Ansprüche 1 bis 8,
**dadurch gekennzeichnet,**
daß die mittlere Meßtiefe durch Vorgabe der Erregerfrequenz von Laser-Erreger (5) oder Sendespule (21) bestimmt wird.

10. Vorrichtung zum Durchführen des Verfahrens nach mindestens einem der Ansprüche 1 bis 9,
**dadurch gekennzeichnet,**
daß zum Erzeugen eines Quellbereichs (28) mechanischer Wellen (7, 8) ein mit einer der gewünschten Wellenlänge entsprechenden Frequenz erregter Laserstrahl (4) bzw. eine Sendespule (21) vorgesehen sind.
